# EUROPEAN PATENT SPECIFICATION

(11) **EP 4 230 084 B1**
(45) Date of publication and mention of the grant of the patent: **16.04.2025**
(21) Application number: 22382124.0
(22) Date of filing: 16.02.2022
(51) Int. Cl.: A47B 47/00, A47B 47/05, F16B 12/40

(54) **ASSEMBLY SYSTEM OF TUBULAR ELEMENT FURNITURE**
MONTAGESYSTEM FÜR MÖBEL AUS ROHRFÖRMIGEN ELEMENTEN
SYSTÈME D'ASSEMBLAGE DE MEUBLES À ÉLÉMENTS TUBULAIRES

(43) Date of publication of application: 23.08.2023
(73) Proprietor: SITAB SYSTEM SLu, Itziar (ES); Uriarte Ayo, Francisco Javier, 48370 Bermeo (Bizkaia) (ES)
(72) Inventor: Uriarte Ayo, Francisco Javier, 48370 Bermeo (Bizkaia) (ES)
(74) Representative: Clarke, Modet y Cía., S.L.

(56) References cited:
- FR-A1- 2 753 241
- GB-A- 2 226 613
- US-A- 1 241 137
- US-A- 5 957 614

## Description

### Field of the invention

The present invention relates to the technical field of furniture, more specifically to the assembly systems of lightweight structures forming said furniture, and more specifically to the assembly systems of modular structures for furniture formed by tubular elements. The present invention relates to an assembly system of tubular element furniture in which simple, quick and intuitive construction or assembly is achieved by simple connecting nodes and a single threaded attachment.

### Background of the invention

In all the construction processes of systems, and specifically in the assemblies of furniture structures, it is sought to assemble the different components of the system in such a way that the built structure is solidly and structurally stable, and with the maximum dimensional reliability. This process must be carried out by means of an incorporation order of the parts always carried out in two movements, which are approach of the elements, and closing and tightening of these. The quality of this process marks and establishes the possibilities of the system used.

Currently there are different construction and assembly systems of furniture modular structures formed by tubular elements, and different manufacturers of these assembly systems of furniture structures encounter the problem of how to solve meeting of different metallic tubes in the three directions X, Y, Z of the space at an intersection point or knot, the maximum being the attachment of six tubes in the three directions X, Y, Z in a knot or node.

This meeting of the different tubes in the three directions X, Y, Z at an intersection point or node is carried out by different systems that involve the intervention of screws or the like assigned to each tube that intervenes in the X, Y, Z, leading to the intervention of up to six screws. In the most significant cases, to solve the constructive need it is necessary not only of up to six attachment elements by thread, but also of ad hoc tools to solve the process, restricting its use to specialized and qualified personnel.

In other cases, meeting is resolved through the repeated use of structural elements and attachment elements between them, but all of them are complex and require the intervention of specialized and qualified personnel, which makes it impossible for the end user to assemble the furniture.

Therefore, in current construction systems of furniture by the assembly of tubular elements, their construction and assembly methods correspond to a business positioning model that is based on the intermediation of a figure, the distributor, who acts as a link with the end consumer, and its intervention in the process beyond the act of selling, provides the product with the last route in generating added value, by the final assembly of the product and the more demanding this is, the greater the value and the more restrictive the process is, being more necessary the intervention of trained personnel, making difficult the assembly to the end user and therefore making difficult online trading without the figure of the distributor.

Document US5957614A discloses a connection system for structurally connecting horizontal frame members and vertical supports. The system has connector pairs and supports, frame members and connector pairs for accommodating frame members and supports.

Document FR2753241A1 discloses an assembly unit of modular furniture formed of assembly nodes made up essentially of a cylindrical element carrying a cylindrical base part of a smaller diameter and surmounted by a cylindrical vertical piece. The base part and the vertical piece are covered by a sleeve of the same diameter as the cylindrical element.

It is therefore desirable a simple and intuitive assembly system of tubular element furniture that allows assembly by the end user thus avoiding the drawbacks of existing systems in the state of the art.

### Description of the invention

The present invention relates to an assembly system of tubular element furniture.

This system provides a quick attachment for an intuitive and solid assembly of metal tubes, although the tubes may be of any other material suitable for the furniture. The system will be ideal for lightweight constructions, mainly furniture, elements of scenery and interior architecture, modular furniture, and all constructions made using mechanical type components.

This system is formed by a plurality of first tubular elements which in the assembly of the structure are arranged horizontally and by a plurality of second tubular elements which in the assembly of the structure are arranged vertically. The first tubular elements have first connecting elements at their ends, while the second tubular elements have second connecting elements at their ends. The system also has connecting nodes for attachment of the tubular elements together along the three directions of space, through their connecting elements, which are those that are attached to the connecting nodes. That is, the tubular elements of the three directions of the space are located between them in the connecting nodes through their connecting elements.

The connecting nodes consist in a tubular body arranged vertically in the assembly, which has an inverted frustoconical-shaped interior void, having the upper major base, and the lower minor base, that is, with the major base located above the minor base, and a plurality of openings in the outer surface of the tubular body for the introduction of the first connecting elements of the first tubular elements into the interior of the connecting node.

The number of openings in the outer surface of the tubular body will depend on the number of first horizontal connecting elements that will be attached to the connecting node, although alternatively equal connecting nodes may be used for all attachments, always with four openings, which is the maximum number of first horizontal connecting elements that will be attached to the connecting nodes. In this case, if fewer connecting elements are attached, there will be openings in the outer surface of the tubular body that are not closed with connecting elements but fixing and closing will be carried out correctly as well.

Thus, according to the present invention, the first connecting elements of the first tubular elements have a frustoconical sector corresponding to a quarter of the interior void of the connecting nodes, so that during assembly they are introduced into the interior void of the connecting nodes filling said interior void and thus being configured a vertical internal through-hole. In this way, when the four frustoconical sectors of four first tubular elements are assembled in the horizontal plane, an inverted frustoconical element of equal dimensions to the interior void of the connecting node is reproduced, filling the same in positive/negative mode, or mold/counter-mold.

These frustoconical elements are introduced into the interior void of the connecting node through the openings of the outer surface of the tubular body by an up-down vertical trajectory movement. This vertical trajectory movement together with the inverted frustoconical configuration of the elements causes a displacement and adjustment in the horizontal X-Y plane, obtaining an exact and solid positioning of the elements of the structure that do not have, also avoiding any incorrect positioning.

Additionally, the second connecting elements of the second tubular elements have tongue and groove means, preferably threaded, such as screw-nut sets, which in the assembly, traverse the vertical internal through-hole of the connecting nodes joining two second vertical tubular elements, one on each side of the connecting node, and carrying out the closure and fixing of the tubular elements to the connecting node. This is the only threaded element, which acts as a closure, in addition to allowing the attachment of the connecting node to the second tubular elements in the Z axis.

In this way, the present invention is based on the functional use of the geometry of the frustoconical elements. It can be note simply that there are two elements, on the one hand the cylindrical shape connecting node with an interior void in the shape of an inverted truncated cone and with a central hole, and on the other hand connecting elements formed by frustoconical sectors that correspond to a fourth of the volume of said interior void, so that if four of these connecting elements are introduced into the interior void of the connecting node, the interior volume is completely reconstructed, forming at the same time a central hole through which the closing and tightening screw is inserted. Each connecting element in the X-Y plane inside the connecting node is anchored in wedge shape of circular planes, in such a way that by gravity it cannot move from its position, the structure being fixed and secured.

Preferably, the system has frustoconical wedges corresponding to a portion of the interior void of the connecting nodes. These frustoconical wedges will be introduced into the connecting nodes when necessary to fill existing gaps and complete the interior void, when the first four connecting elements have not been introduced into them.

Depending on the attachment point or connecting node of tubular elements, and the relative position it occupies in the structure of the furniture, different number of tubular elements will converge in the connecting node.

In the case of inner connecting nodes of the structure, six tubular elements will converge, four of them being first horizontal tubular elements, and the other two second vertical tubular elements, which are those by the second tongue and groove connecting elements perform screwing and closing of the system. In this case, the first connecting elements of the first horizontal tubular elements, that is, the four frustoconical sectors completely fill the interior void of the connecting node.

On the other hand, in the corners or vertices of the structure three tubular elements will converge, two of them being first horizontal tubular elements, and the other a second vertical tubular element, so that on the other side of the connecting node with respect to this second vertical tubular element another second vertical tubular element must be added, but in this case as a cover, to perform screwing and closing of the system. This cover can be top, or bottom, as a leg, which preferably can be adjustable. In this case, as there are only two frustoconical sectors filling the interior void of the connecting node, a frustoconical wedge corresponding to half of the interior void of the connecting node will be added. Alternatively, and depending on distinctive designs, two frustoconical wedges corresponding to a quarter of the interior void of the connecting node could be added, or even only one frustoconical wedge corresponding to a quarter of the interior void, since even if a quarter remained unfilled fixing would be carried out efficiently.

In case of wanting to obtain a large dimension, large tubular elements can be used, or alternatively two or more tubular elements could be attached by connecting nodes. In the case of filling the interior void by means of frustoconical wedges, it would act in a similar way as indicated above. As a rule, it can be indicated that there will be a correct fixing of the first connecting elements inside the connecting nodes if there are no free gaps in the interior void, or at most there is a quarter of the interior void free. If half of the interior void remains free, it should be used a frustoconical wedge, otherwise half the size of the internal void, otherwise two wedges of quarter size of the interior void, or alternatively a single wedge of quarter size of the interior void, since only one quarter of the interior void remains unfilled and fixing will be carried out correctly.

Preferably, the first tubular elements have a transition segment that attach the frustoconical sector to the first tubular element. This transition segment has a variable section along the longitudinal axis of the first tubular element, varying from the attachment area to the first tubular element where the transition segment has a section equal to that of the first tubular element, to the area of attachment to the frustoconical sector, which in use will contact the outer surface of the tubular body, and which has a rectangular section.

That is, this transition segment is a neck that narrows and reconfigures from the shape and diameter of the tubular element to reach a rectangular section of suitable size to be able to penetrate the attachment knot through the openings located perimeterally in the tubular body. This transition segment may be referred to as a "gooseneck."

Thus, by means of the assembly system, object of the present invention, a very solid attachment is obtained in meeting of six tubes by using a single threaded element (screw-nut element), which acts as a closure, obtaining a stable attachment without the use of tools.

In addition, this system provides a quick to assemble intuitive assembly, where participating elements are reduced, and that does not need special tools or specialized knowledge, so that the assembly does not need qualified personnel, but can be carried out directly by the end user of the furniture structure, which facilitates the online sales channel without the need for intermediaries.

Therefore, by means of the present invention, the technique and the process are adapted to the current moment, where the online sale is based on the ability of the end consumer to interact with the products and carry out those necessary final phases that allow their complete assembly and functional use without intermediation of specialized professionals, so that the end user of the furniture is placed at the center and origin of the design of the assembly system of furniture.

Thus, the present invention serves to make structural constructions by using tubes, fundamentally furniture that can functionally be present in all areas of a house (kitchen furniture, bookcases, bedside tables, sideboards, etc.), of an office, in spaces of public use, retail, partition screens, interior and ephemeral architecture (stands), etc. Its importance lies in the fact that it allows to manufacture constructions of quite easy assembly and disassembly, with the ability to modify their dimensions and functionality immediately and easily, in environments of use in which ease and speed of this process constitute a need and a value in itself, in a society like the current one characterized by great social and business mobility. The present invention allows any end user to be trained to interact with the assembly and disassembly of a product typology (construction systems) for which up to now existing systems on the market require trained and specialized professionals. This, together with the fact that the constructions are totally removable, which allows them to travel in flat package with minimum volume, makes the present invention the critical element, to be able to access by the online sale to an extensive market and without limitations derived from the technique or the distributor figure, which increase their final selling price.

### Brief description of the drawings

In the following, for ease of understanding of the invention, an embodiment of the invention referring to a series of drawings will be described by way of illustration but not limitation.

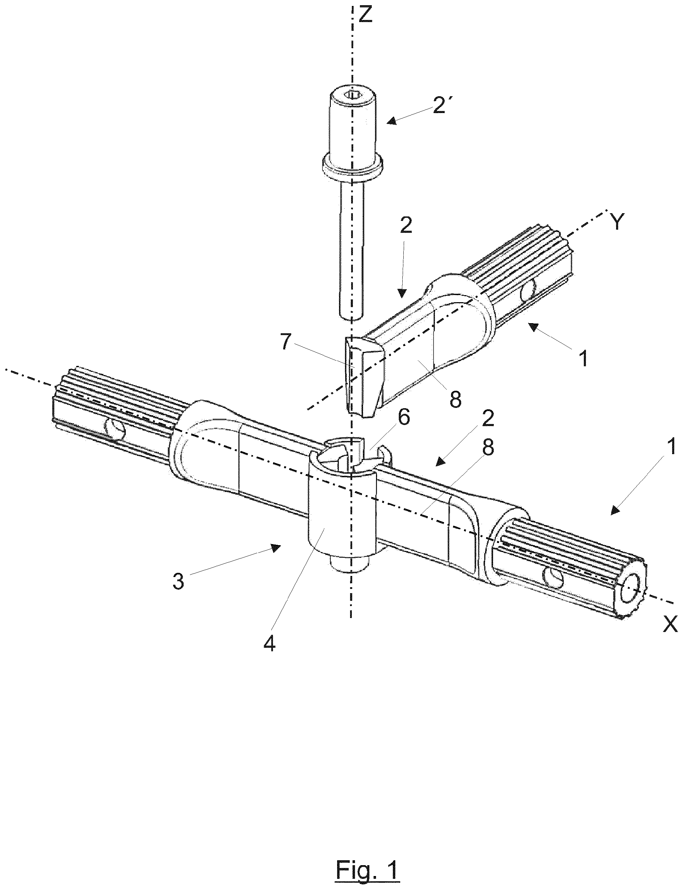

Figure 1 depicts an embodiment of the assembly system of the present invention, in which a connecting node, first horizontal tubular elements with their respective first connecting elements and part of the second vertical connecting elements are shown, to show and facilitate the understanding of the system.

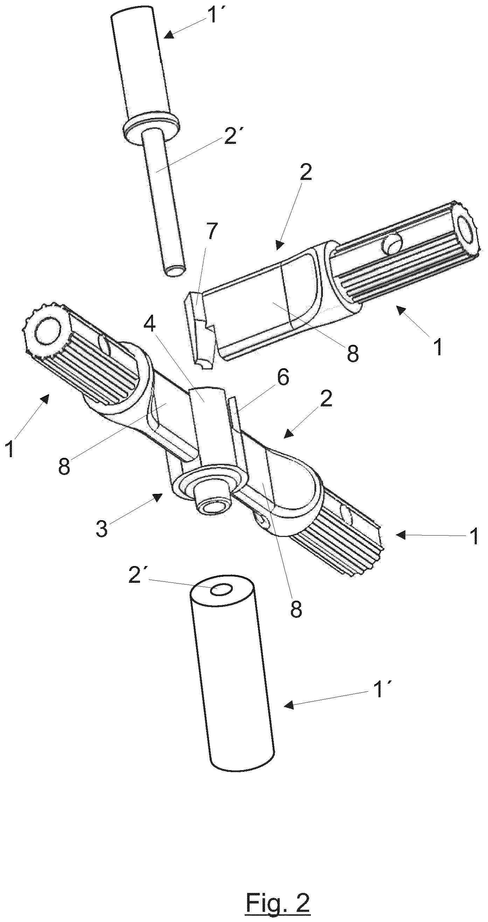

Figure 2 is a perspective of the system of Figure 1, from another view, wherein the second vertical tubular members are included.

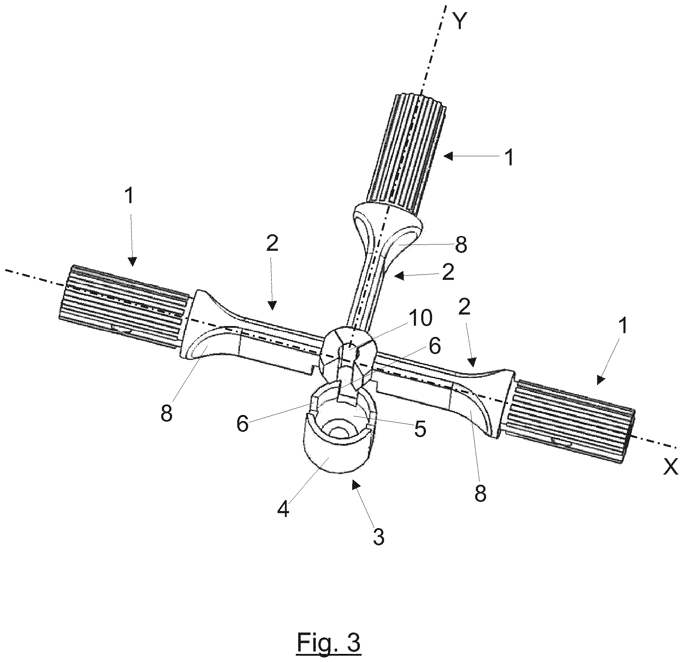

Figure 3 shows the system of the previous figures, without the vertical connecting elements or the second vertical tubular elements, and the first horizontal tubular elements extracted from the connector to show the interior thereof.
Figure 4 is a front elevational view of an embodiment of the system, object of the present invention, with the first horizontal tubular elements assembled, and one of the vertical elements assembled while the other vertical element is removed to show its connecting element.
Figure 5 is a sectional view by plane AA of Figure 4.
Figure 6 is an enlarged view of detail B of Figure 5.
Figure 7 is a plan view of the system of Figures 4 to 6.

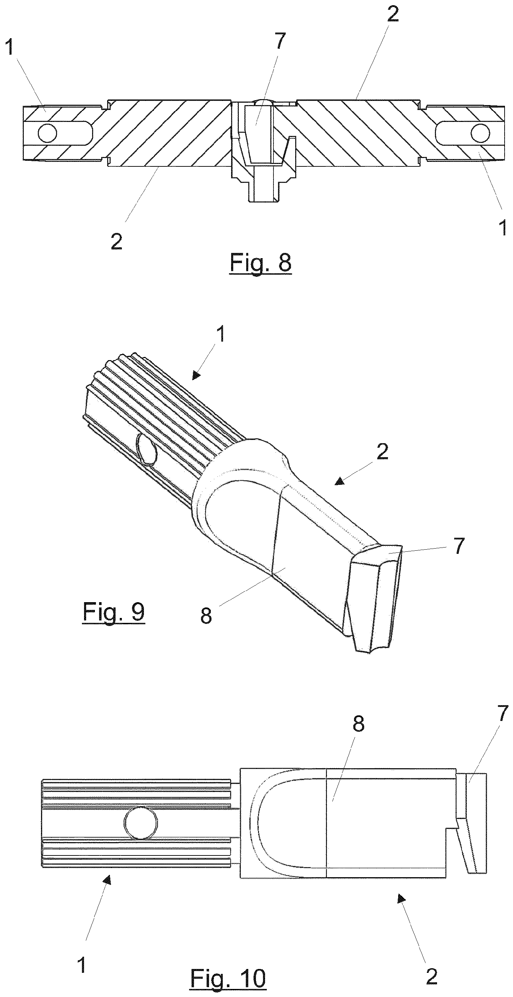

Figure 8 is a sectional view by plane BB of Figure 7.
Figure 9 is a perspective of an embodiment of the end of a first horizontal tubular element including its connecting element and the transition segment.
Figure 10 is a front elevational view of the end of the first horizontal tubular element of Figure 9.
Figure 11 shows a front elevational schematic view of an embodiment of the system in which the second lower vertical tubular element is a cover that acts as a leg.
Figure 12 is an extension of detail A of Figure 11 in section.
Figure 13 is a perspective view of the cover of Figures 11 and 12.
Figure 14 is a front elevational view of the system of Figures 11 to 13.
Figure 15 is a perspective view of the system of Figures 11 to 14.
Figure 16 is a perspective view of an embodiment of the system in which two first horizontal tubular elements are attached in a connecting node and additionally a frustoconical wedge is introduced to fill the remaining void of the interior void of the connecting node.
Figure 17 is an embodiment of a structure in the three dimensions X,Y,Z according to the assembly system of the present invention.
Figure 18 is an embodiment of a structure according to the assembly system of the invention showing as second lower vertical tubular elements covers acting as legs.

In these figures refer to an element set that are:
- 1.: first tubular elements
- 1'.: second vertical tubular elements
- 2.: first connecting elements of the first tubular elements
- 2'.: second connecting elements of the second tubular elements
- 3.: connecting nodes
- 4.: tubular body of the attachment nodes
- 5.: interior void of the tubular body
- 6.: openings in the outer surface of the tubular body
- 7.: frustoconical sector of connecting elements
- 8.: transition segment of the connecting elements
- 9.: frustoconical wedges
- 10.: vertical internal through-hole of the connecting nodes
- X.: horizontal X-axis
- Y.: horizontal Y-axis
- Z.: vertical Z-axis

### Detailed description of the invention

The object of the present invention is an assembly system of tubular element furniture. As can be seen in the figures, the system is formed by a plurality of first tubular elements (1) which in assembly of the structure are arranged horizontally and by a plurality of second tubular elements (1') which in assembly of the structure are arranged vertically. The first tubular elements (1) have first connecting elements (2) at their ends, while the second tubular elements (1') have second connecting elements (2') at their ends. The system also has connecting nodes (3) for attachment of the tubular elements (1,1') to each other along the three directions of space (X,Y,Z), through their connecting elements (2,2'), which are those that are attached to the connecting nodes (3). That is, the tubular elements (1,1') of the three directions of space (X,Y,Z) meet each other in the connecting nodes (3) through their connecting elements (2,2').

The connecting nodes (3) consist in a tubular body (4) arranged vertically in the assembly, which has an interior void (5) with inverted frustoconical shape, having the upper major base, and the lower minor base, that is, with the major base located above the minor base, and a plurality of openings (6) in the outer surface of the tubular body (4) for the introduction of the first connecting elements (2) of the first tubular elements (1) into the interior of the connecting node (3).

As can be seen in the figures, the number of openings (6) that are necessary in the outer surface of the tubular body (2) will depend on the number of first connecting elements (2) that will be attached to the connecting node (3), although according to alternative embodiments equal connecting nodes (3) may be used for all attachments, always with four openings (6), which is the maximum number of first connecting elements (2) that will be attached to the connecting nodes (3). Logically, in this case, if fewer than four first connecting elements (2) are attached, there will be openings (6) in the outer surface of the tubular body (4) that are not closed with the first connecting elements (2), but even so fixing and closing will be carried out correctly.

Thus, according to the present invention, the first connecting elements (2) of the first tubular elements (1) have a frustoconical sector (7) corresponding to a quarter of the interior void (5) of the connecting nodes (3), so that during assembly they are introduced into the interior void (5) of the connecting nodes (3) filling said interior void (5) and thus being configured an internal through-hole (10) vertical.

Additionally, the second connecting elements (2') of the second tubular elements (1') have tongue and groove means, preferably threaded, such as screw-nut sets, which in assembly, traverse the vertical internal through-hole (10) of the connecting nodes (3) attaching two second vertical tubular elements (1'), one on each side of the connecting node (3), and carrying out closure and fixing of the tubular elements (1,1') to the connecting node (3).

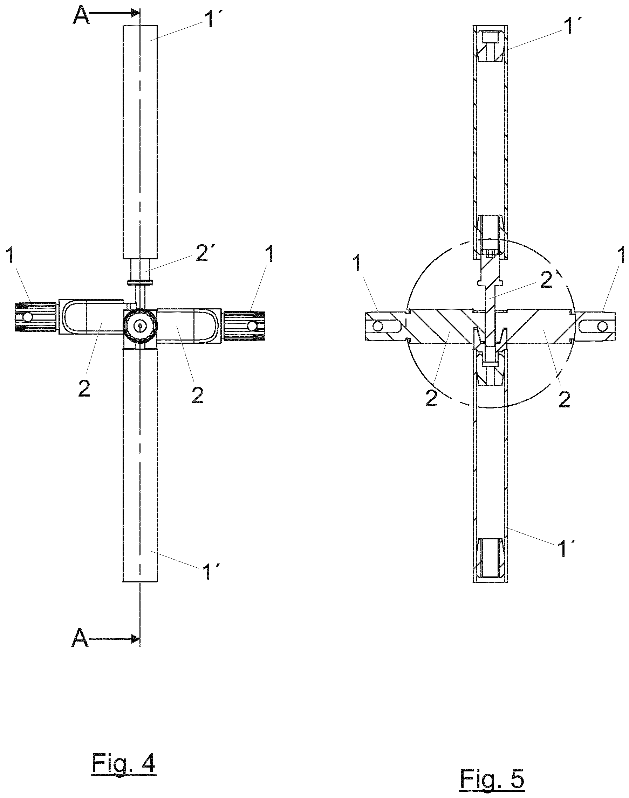

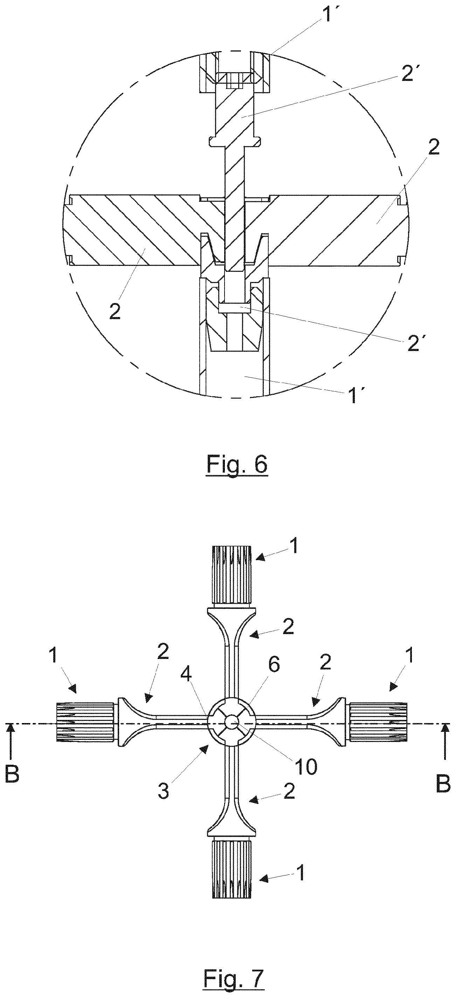

According to a preferred embodiment of the invention, which can be seen in Figures 4 to 6, the second connecting elements (2') on the Z axis with tongue and groove threaded means has a staggered execution combining the metric M6 and M12 with a separating disk between both metrics, which acts as a closure plug inside the connecting node (3). Preferably, the system has frustoconical wedges (9) corresponding to a portion of the interior void (5) of the connecting nodes (3). These frustoconical wedges (9) will be introduced into the connecting nodes (3) when necessary to fill existing gaps in the interior void (5) and complete said interior void (5), when the first four connecting elements (2) have not been introduced into the connecting nodes (3).

Thus, according to particular embodiments of the assembly system, object of the invention, depending on the attachment point or connecting node (3) of tubular elements (1,1'), and the relative position it occupies in the structure of the furniture, in the connecting node (3) obviously different number of tubular elements will converge.

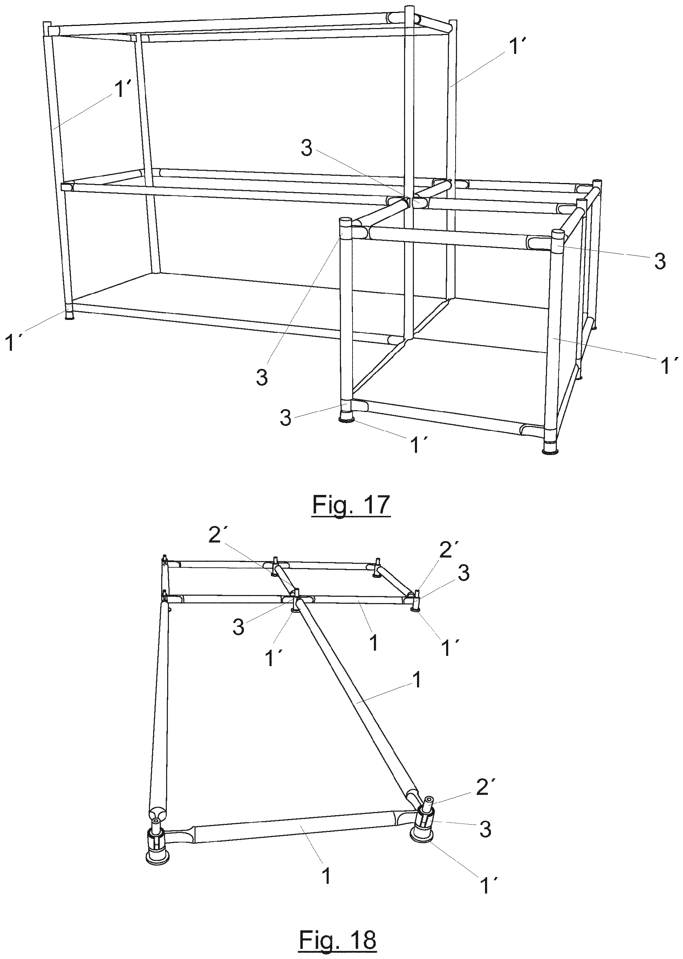

In the case of interior connecting nodes (3) of the structure, as can be seen in Figures 4, 5 and 7, and the interior node of the structure of Figure 17, six tubular elements (1,1') will converge, four of them being first tubular elements (1) horizontal, and the other two second tubular elements (1') vertical, which are those by the second tongue and groove connecting elements (2') perform screwing and closing of the system. In this case, the first connecting elements (2) of the first horizontal tubular elements (1), that is, the four frustoconical sectors (7) completely fill the interior void (5) of the connecting node.

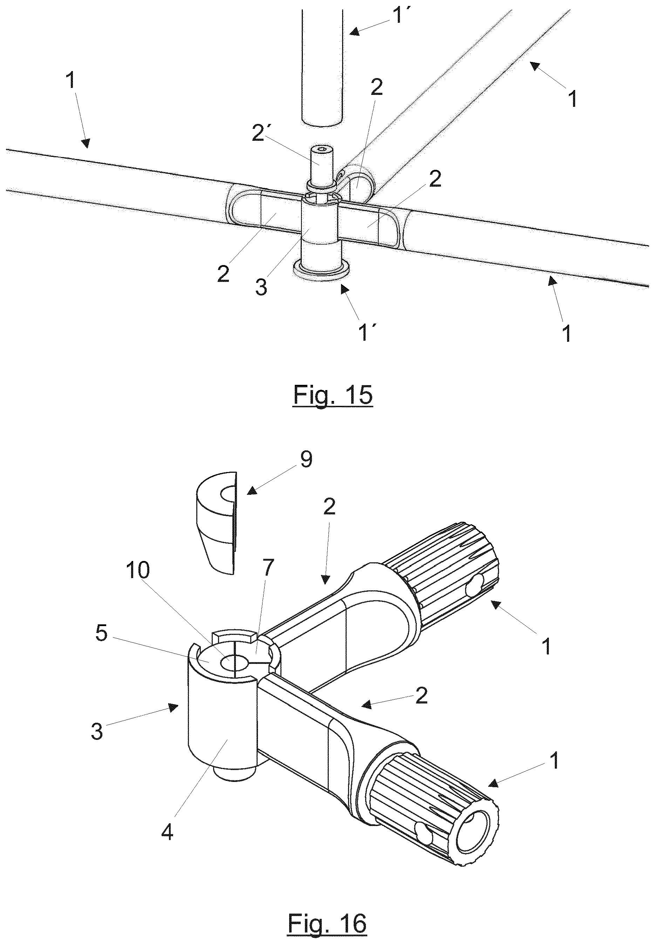

On the other hand, in the corners or vertices of the structure, as can be seen in the corner points of the structure of figure 17, three tubular elements (1,1) will converge, two of them being first tubular elements (1) horizontal, and the other a second tubular element (1') vertical, so that on the other side of the connecting node (3) with respect to this second tubular element (1') vertical another second vertical tubular element (1') must be added, but in this case as a cover, to perform screwing and closing of the system. This cover can be top, or bottom, as a leg, which preferably can be adjustable. In this case, as there are only two frustoconical sectors (7) filling the interior void (5) of the connecting node (3), a frustoconical wedge (9) corresponding to half of the interior void (5) of the connecting node (3) will be added, as can be seen in Figure 16. Alternatively, and depending on distinctive designs, two frustoconical wedges corresponding to a quarter of the interior void of the connecting node could be added, or even only one frustoconical wedge corresponding to a quarter of the interior void, since even if a quarter remained unfilled fixing would be carried out efficiently. Figure 18 also shows lower covers as a leg.

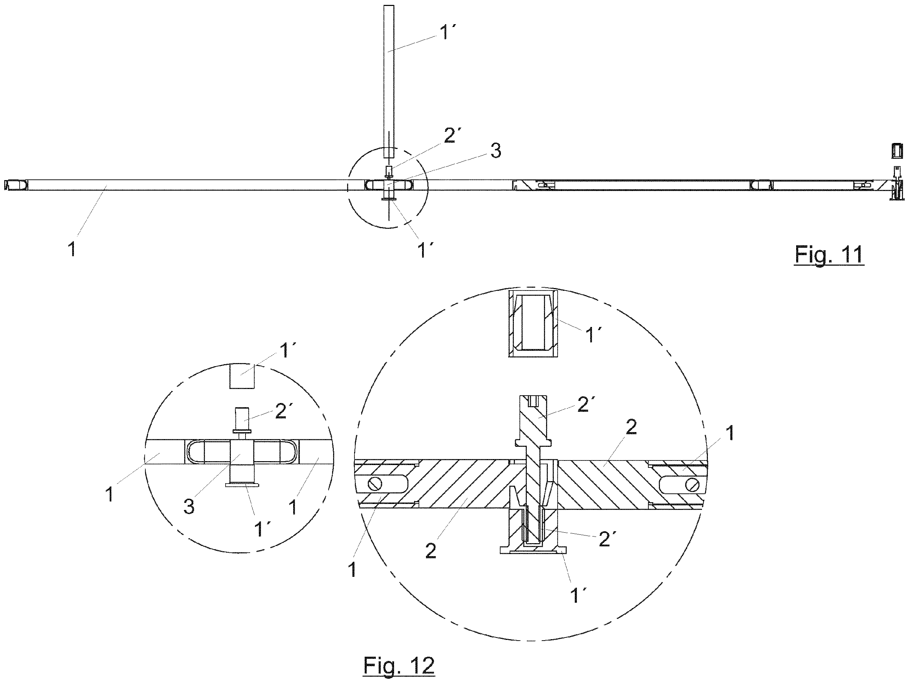

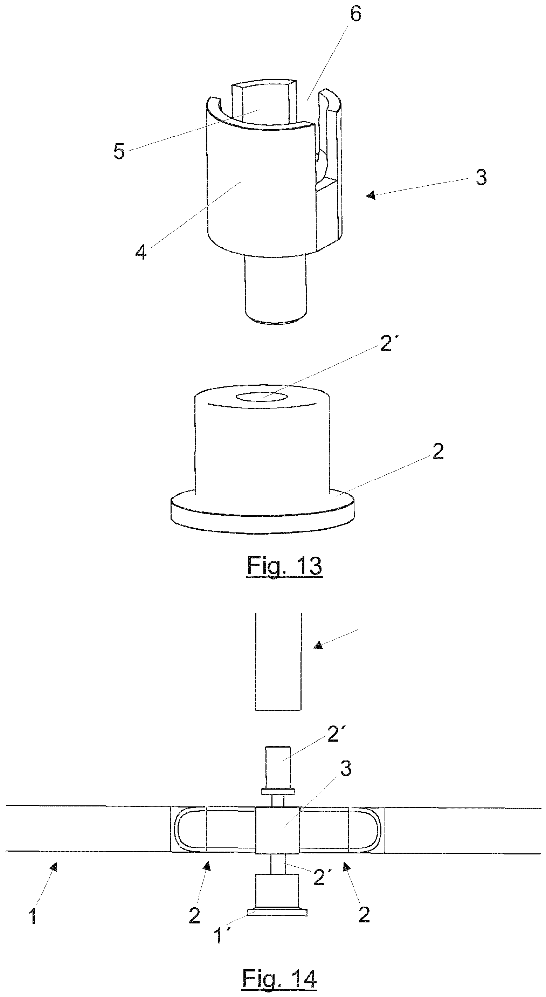

Figures 11 to 15 show a connecting node in which three first tubular elements (1) and two second tubular elements (1') converge, one of them being a cover, that is, nodes in an intermediate point of the structure of figure 17. In this case, since there are three frustoconical sectors (7) in the horizontal plane X-Y filling the interior void (5) of the connecting node (3), it will not be necessary to add a frustoconical wedge (9) corresponding to a quarter of the interior void (5) of the connecting node (3), since as indicated, although a quarter remains unfilled fixing is carried out efficiently.

In case of wanting to obtain a large dimension, large tubular elements (1) can be used, or alternatively two or more tubular elements (1) could be attached by connecting nodes (3). In the case of filling the interior void (5) by means of frustoconical wedges (9), it would act in a similar way as indicated above. As a rule, it can be indicated that there will be a correct fixing of the first connecting elements (1) inside the connecting nodes (3) if there are no free gaps in the interior void (5), or at most there is a quarter of the interior void (5) free. In the event that half of the interior void (5) remains free, it should be used a frustoconical wedge (9), otherwise half the size of the interior void (5), or two wedges (9) of one quarter the size of the interior void (5), or alternatively a single wedge (9) of one quarter the size of the interior void (5), since only one quarter of the interior void (5) remains unfilled and fixing will be carried out correctly.

Preferably, the first tubular elements (1) have a transition segment (8) that attach the frustoconical sector (7) to the first tubular element (1). This transition segment (8) has a variable section along the longitudinal axis of the first tubular element (1), varying from the attachment area to the first tubular element (1) where the transition segment (8) has a section equal to that of the first tubular element (1), up to the attachment area to the frustoconical sector (7), which in use will contact the outer surface of the tubular body (4), and having a rectangular section.

That is, as can be seen in the figures, this transition segment (8), also called "gooseneck", is a neck that narrows and reconfigures from the shape and diameter of the tubular element (1) to reach a rectangular section of suitable size to be able to penetrate the connecting node (3) through the openings (6) located perimeterally in the tubular body (4).

## Claims

1. Assembly system of tubular element furniture, comprising
- a plurality of first tubular elements (1) arranged in use horizontally and comprising at their ends first connecting elements (2), a plurality of second tubular elements (1') arranged in use vertically and comprising at their ends second connecting elements (2'), and connecting nodes (3) configured for attachment of the tubular elements (1,1') to each other along the three directions of space (X,Y, Z), through their connecting elements (2,2'),
**characterized in**
- the connecting nodes (3) comprise a tubular body (4) arranged vertically in use, comprising an interior void (5) with frustoconical shaped upper major base and lower minor base, and a plurality of openings (6) in the outer surface of the tubular body (4) configured for introduction of the first connecting elements (2) of the first tubular elements (1),
- the first connecting elements (2) of the first tubular elements (1) comprise a frustoconical sector (7) corresponding to a quarter of the interior void (5) of the connecting nodes (3), configured in use to be introduced into the interior void (5) of the connecting nodes (3) filling said interior void (5) and being configured to form a vertical internal through-hole (10),
- and the second connecting elements (2') of the second tubular elements (1') comprise tongue and groove means configured to in use traverse the vertical internal through-hole (10) attaching two second vertical tubular elements (1'), one on each side of the connecting node (3), and carrying out closure and fixing of the tubular elements (1,1') to the connecting node (3).

2. Assembly system of tubular element furniture according to claim 1, comprising a plurality of frustoconical wedges (9) corresponding to a certain portion of the interior void (5) of the connecting nodes (3), configured in use to fill existing gaps in the interior void (5).

3. Assembly system of tubular element furniture, according to any of the preceding claims, wherein the first tubular elements (1) comprise a transition segment (8) that attach the frustoconical sector (7) to the first tubular element (1), having the transition segment (8) variable section along the longitudinal axis of the first tubular element (1), from the attachment area to the first tubular element (1) with a section equal to that of said first tubular element (1) to the area of attachment to the frustoconical sector (7) that in use contacts the outer surface of the tubular body (4), with rectangular section.

## Patentansprüche

1. Montagesystem für Möbel aus rohrförmigen Elementen, umfassend
eine Vielzahl von ersten rohrförmigen Elementen (1), die bei der Verwendung horizontal angeordnet sind und an ihren Enden erste Verbindungselemente (2) umfassen, eine Vielzahl von zweiten rohrförmigen Elementen (1'), die bei der Verwendung vertikal angeordnet sind und an ihren Enden zweite Verbindungselemente (2') umfassen, und Verbindungsknoten (3), die für die Befestigung der rohrförmigen Elemente (1, 1') aneinander entlang der drei Raumrichtungen (X, Y, Z) durch ihre Verbindungselemente (2, 2') konfiguriert sind,
**dadurch gekennzeichnet,**
- **dass** die Verbindungsknoten (3) einen rohrförmigen Körper (4) umfassen, der bei der Verwendung vertikal angeordnet ist, umfassend einen Innenhohlraum (5) mit einer kegelstumpfförmigen oberen Hauptbasis und einer unteren Nebenbasis und eine Vielzahl von Öffnungen (6) in der Außenfläche des rohrförmigen Körpers (4), die für die Einführung der ersten Verbindungselemente (2) der ersten rohrförmigen Elemente (1) konfiguriert sind,
- **dass** die ersten Verbindungselemente (2) der ersten rohrförmigen Elemente (1) einen kegelstumpfförmigen Sektor (7) umfassen, der einem Viertel des Innenhohlraums (5) der Verbindungsknoten (3) entspricht, der bei der Verwendung dazu konfiguriert ist, in den Innenhohlraum (5) der Verbindungsknoten (3) eingeführt zu werden, wobei der Innenhohlraum (5) ausgefüllt wird, und dazu konfiguriert ist, ein vertikales inneres Durchgangsloch (10) zu bilden,
- und **dass** die zweiten Verbindungselemente (2') der zweiten rohrförmigen Elemente (1') Nut- und Feder-Mittel umfassen, die dazu konfiguriert sind, bei der Verwendung das vertikale innere Durchgangsloch (10) zu durchqueren, wobei zwei zweite vertikale rohrförmige Elemente (1') befestigt werden, eines auf jeder Seite des Verbindungsknotens (3), und wobei das Verschließen und Fixieren der rohrförmigen Elemente (1, 1') an dem Verbindungsknoten (3) durchgeführt wird.

2. Montagesystem für Möbel aus rohrförmigen Elementen nach Anspruch 1, umfassend eine Vielzahl von kegelstumpfförmigen Keilen (9), die einem bestimmten Teil des Innenhohlraums (5) der Verbindungsknoten (3) entsprechen und die bei der Verwendung dazu konfiguriert sind, vorhandene Lücken im Innenhohlraum (5) zu füllen.

3. Montagesystem für Möbel aus rohrförmigen Elementen nach einem der vorhergehenden Ansprüche, wobei die ersten rohrförmigen Elemente (1) ein Übergangssegment (8) umfassen, das den kegelstumpfförmigen Sektor (7) an dem ersten rohrförmigen Element (1) befestigt, wobei das Übergangssegment (8) entlang der Längsachse des ersten rohrförmigen Elements (1) einen variablen Querschnitt aufweist, von dem Befestigungsbereich an dem ersten rohrförmigen Element (1) mit einem Querschnitt, der gleich dem des ersten rohrförmigen Elements (1) ist, bis zu dem Befestigungsbereich an dem kegelstumpfförmigen Sektor (7), der bei der Verwendung mit der Außenfläche des rohrförmigen Körpers (4) in Kontakt kommt, mit einem rechteckigen Querschnitt.

## Revendications

1. Système d'assemblage de meubles à éléments tubulaires, comprenant
- une pluralité de premiers éléments tubulaires (1) disposés en horizontal lors de l'utilisation et comprenant à leurs extrémités des premiers éléments de liaison (2), une pluralité de deuxièmes éléments tubulaires (1') disposés en vertical lors de l'utilisation et comprenant à leurs extrémités des deuxièmes éléments de liaison (2'), et des nœuds de liaison (3) configurés pour l'attachement des éléments tubulaires (1, 1') les uns aux autres selon les trois directions dans l'espace (X, Y, Z), par leurs éléments de liaison (2, 2'),
**caractérisé en ce que**
- les nœuds de liaison (3) comprennent un corps tubulaire (4) disposé en vertical lors de l'utilisation, comprenant un évidement intérieur (5) avec une base majeure supérieure de forme tronconique et une base mineure inférieure, et une pluralité d'ouvertures (6) dans la surface extérieure du corps tubulaire (4) configurée pour l'introduction des premiers éléments de liaison (2) des premiers éléments tubulaires (1),
- les premiers éléments de liaison (2) des premiers éléments tubulaires (1) comprennent un secteur tronconique (7) correspondant à un quart de l'évidement intérieur (5) des nœuds de liaison (3), configuré pour être introduit lors de l'utilisation dans l'évidement intérieur (5) des nœuds de liaison (3) en remplissant ledit évidement intérieur (5) et étant configuré pour former un trou traversant interne vertical (10),
- et les deuxièmes éléments de liaison (2') des deuxièmes éléments tubulaires (1') comprennent des moyens à languette et rainure configurés pour traverser, lors de l'utilisation, le trou traversant interne vertical (10) attachant deux deuxièmes éléments tubulaires verticaux (1'), un de chaque côté du nœud de liaison (3), et en réalisant la fermeture et la fixation des éléments tubulaires (1, 1') au nœud de liaison (3).

2. Système d'assemblage de meubles à éléments tubulaires selon la revendication 1, comprenant une pluralité de cales tronconiques (9) correspondant à une certaine portion de l'évidement intérieur (5) des nœuds de liaison (3), configurées pour remplir, lors de l'utilisation, des espaces existants dans l'évidement intérieur (5).

3. Système d'assemblage de meubles à éléments tubulaires, selon l'une quelconque des revendications précédentes, dans lequel les premiers éléments tubulaires (1) comprennent un segment de transition (8) attachant le secteur tronconique (7) au premier élément tubulaire (1), le segment de transition (8) ayant une section variable le long de l'axe longitudinal du premier élément tubulaire (1), de la zone d'attachement au premier élément tubulaire (1) avec une section égale à celle dudit premier élément tubulaire (1) jusqu'à la zone d'attachement au secteur tronconique (7) qui, lors de l'utilisation, entre en contact avec la surface extérieure du corps tubulaire (4), avec une section rectangulaire.
